# FASCICULE DE BREVET EUROPEEN

(11) **EP 1 603 285 B1**
(45) Date de publication et mention de la délivrance du brevet: **07.03.2007**
(21) Numéro de dépôt: 04291364.0
(22) Date de dépôt: 01.06.2004
(51) Int. Cl.: H04L 12/56

(54) **Procédé de gestion de dysfonctionnements au niveau d'un équipement de routage**
Verfahren und System zur Handhabung von Ausfällen auf Routerniveau
Method and system for managing failures at router level

(43) Date de publication de la demande: 07.12.2005
(73) Titulaire: FRANCE TELECOM, 75015 Paris (FR)
(72) Inventeur: Capelle, Marc, 91380 Chilly Mazarin (FR); Billaut, François, 75014 Paris (FR); Decraene, Bruno, 92170 Vanves (FR)
(74) Mandataire: Habasque, Etienne J. Jean-François

(56) Documents cités:
- US-B1- 6 327 669
- CISCO SYSTEMS: "Catalyst 8500 CSR Architecture" WHITE PAPER, juillet 1998 (1998-07), XP002151999

## Description

La présente invention concerne un procédé de gestion de dysfonctionnements d'un réseau de télécommunication au niveau d'un équipement de routage ainsi qu'un tel équipement de routage.

Dans les réseaux de télécommunication, des routes sont définies pour l'acheminement de paquets de données entre différents équipements de routage.

Tous les équipements comportent plusieurs interfaces de communication avec le réseau. Chaque équipement est amené à utiliser un protocole de communication et certains sont amenés à gérer plusieurs protocoles de communication différents pour acheminer les paquets de données.

De manière classique, un équipement de routage donné comporte ainsi une base de données unitaire d'informations de routage pour chaque protocole de routage dit « RIB » (en anglais « Routing Information Base »). Par exemple, il existe dans un même équipement de routage une base de données de routage pour des protocoles de routage inter-domaine, dits « RIB-EGP » (en anglais « Exterior Gateway Protocol ») et une pour des protocoles de routage intra-domaine, dits « RIB-IGP » (en anglais « Interior Gateway Protocol »).

L'ensemble de ces bases de données unitaires est synthétisé par l'équipement de routage pour former un plan de routage opérationnel, dit « FIB » (en anglais « Forwarding Information Base ») correspondant à la synthèse des bases de données unitaires avec une gestion spécifique des superpositions de route, de manière à obtenir une structure de données donnant toutes les solutions de routage pour un équipement de routage donné.

Ce plan de routage opérationnel est ensuite transmis à chaque interface de l'équipement de routage pour leur permettre de réaliser le routage des paquets de manière autonome et cohérente.

Dans un tel réseau de télécommunication, lorsqu'un dysfonctionnement apparaît, résultant par exemple de l'indisponibilité d'un équipement de routage donné, tout ou partie des autres équipements de routage de ce réseau doivent modifier leur plan de routage opérationnel pour s'adapter au mode de fonctionnement dégradé du réseau. Un tel système est décrit, par exemple, dans le document US 6327669.

Dans les procédés de gestion de dysfonctionnements existants, la détection de la panne est suivie d'une période de propagation de l'information consacrée à l'avertissement de l'ensemble des équipements de routage dont le fonctionnement est perturbé.

Chacun de ces équipements recalcule, de nouveaux chemins de routage et met à jour la base de donnée unitaire relative au protocole associé. Cette mise à jour est suivie d'un nouveau calcul du plan de routage opérationnel, lequel doit ensuite être transféré à chacune des interfaces.

Ces opérations sont longues et complexes et sont aggravées par la multiplication des interfaces et du nombre de routes.

En particulier, le temps nécessaire au calcul de mise à jour de chaque base de données unitaire puis du plan de routage opérationnel et de son transfert vers toutes les interfaces, entraîne une indisponibilité de l'équipement particulièrement pénalisante pour l'ensemble du réseau.

Le but de l'invention est de résoudre ce problème en définissant un procédé de gestion de dysfonctionnements d'un réseau permettant le rétablissement rapide du fonctionnement après la détection d'un dysfonctionnement.

A cet effet, la présente invention a pour objet le procédé de gestion de dysfonctionnements défini selon la revendication 1.

Le calcul préalable de plusieurs plans de routage opérationnels secondaires et leur transfert vers chacune des interfaces, en fonctionnement nominal, permet d'obtenir une commutation rapide des interfaces lorsqu'un dysfonctionnement est détecté.

D'autres caractéristiques du procédé de l'invention sont définies dans les revendications dépendantes.

Par ailleurs, l'invention a également pour objet un équipement de routage selon la revendication 8.

L'invention sera mieux comprise à la lecture de la description qui va suivre, donnée uniquement à titre d'exemple non limitatif en référence aux dessins, sur lesquels :
- la figure 1 est un organigramme du procédé de l'invention ; et
- la figure 2 est un schéma bloc d'un équipement de routage mettant en oeuvre le procédé de la figure 1.

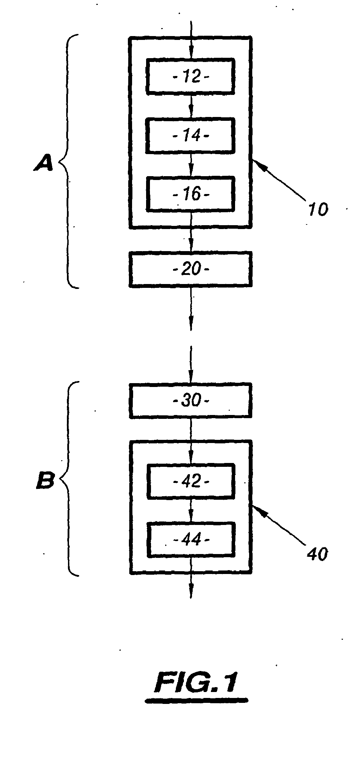

La figure 1 représente l'organigramme du procédé de gestion de dysfonctionnements d'un réseau de télécommunication selon l'invention.

Ce procédé est mis en oeuvre au niveau d'un équipement de routage donné, cet équipement comportant plusieurs interfaces de communication avec le réseau et un plan nominal de routage opérationnel, dit « FIB » (en anglais « Forwarding Information Base ») dupliqué sur chaque interface de communication.

Dans le mode de réalisation décrit, l'équipement de routage comprend plusieurs interfaces de communication et est adapté pour gérer plusieurs protocoles réseaux. II comprend une base de données d'informations de routage unitaire associée à chacun de ces protocoles, dite « RIB » (en anglais « Routing Information Base »).

Ainsi que cela a été indiqué précédemment, une base de données unitaire est définie par exemple pour chaque protocole de routage. Notamment une base de donnée unitaire existe pour chaque protocole inter-domaine, dit « RIB-EGP » (en anglais « Exterior Gateway Protocol »), tel que par exemple le protocole dit « BGP4 ». De même, une base unitaire existe pour chaque protocole de routage intra-domaine, dit « RIB-IGP » (en anglais « Interior Gateway Protocol ») tel que par exemple les protocoles dits « ISIS » ou « OSPF» et pour chaque autre famille de protocole véhiculé sur le réseau, tel que par exemple le protocole dit « MULTICAST ».

Le procédé de l'invention comporte une première phase notée A mise en oeuvre pendant une période de fonctionnement nominal de l'équipement de routage.

Cette première phase A comporte tout d'abord une étape 10 de calcul de plusieurs plans secondaires de routage opérationnel pour des modes de fonctionnement dégradés du réseau.

Dans l'exemple, cette étape 10 comporte une sous-étape 12 de simulation, pour l'équipement de routage considéré, d'un dysfonctionnement. Cette sous-étape 12 est par exemple réalisée à l'aide d'un simulateur distinct de l'équipement de routage et par la sélection manuelle de dysfonctionnements intervenant sur la topologie du réseau.

La sous-étape 12 est suivie d'une sous-étape 14 de calcul des chemins les plus courts d'acheminement des informations dans le mode de fonctionnement dégradé, résultant du dysfonctionnement simulé lors de la sous-étape 12.

La sous-étape 14 est réalisée pour chacune des interfaces de l'équipement de routage grâce à des algorithmes classiques et l'ensemble des résultats obtenus lors de ces sous-étapes 14 est synthétisé lors d'une sous-étape 16 permettant la définition d'un plan secondaire de routage opérationnel pour le mode de fonctionnement dégradé résultant du dysfonctionnement simulé.

Les sous-étapes 12, 14 et 16 sont répétées de manière à obtenir des plans secondaires de routage opérationnel pour tous les dysfonctionnements possibles ou tout le moins pour les principaux dysfonctionnements susceptibles d'arriver, ou encore les dysfonctionnements les plus critiques.

A l'issue de l'étape 10, un ou plusieurs plans secondaires de routage opérationnel sont donc disponibles pour des modes de fonctionnement dégradé du réseau.

Bien entendu, plusieurs modes de fonctionnement dégradé peuvent être associés à un même plan secondaire de routage opérationnel.

Le procédé comporte ensuite une étape 20 de transfert de tous les plans secondaires de routage opérationnel à chaque interface de l'équipement de routage.

Cette étape 20 est également réalisée au cours de la phase A, soit pendant une période de fonctionnement nominal de l'équipement de routage, de sorte que le temps de transfert de l'ensemble de ces plans secondaires n'influe pas sur le comportement opérationnel de l'équipement de routage.

A l'issue de l'étape 20, chaque interface de l'équipement de routage dispose donc du plan nominal de routage opérationnel ainsi que d'un ou plusieurs plans secondaires de routage opérationnel pour des modes de fonctionnement dégradé du réseau.

Le procédé de l'invention comporte ensuite une phase B mise en oeuvre dans le cas de la détection d'un dysfonctionnement sur le réseau, cette phase B pouvant intervenir, par nature, n'importe quand par rapport à la phase A.

La phase B débute par une étape 30 de détection d'un dysfonctionnement par l'équipement de routage. Par exemple, cette étape 30 de détection correspond de manière classique à la perte d'un signal physique, à l'absence de réception de trames ou de paquets de données correspondants à une déclaration protocolaire envoyée régulièrement par un équipement à ses voisins pour les informer de son état de fonctionnement.

L'étape 30 de détection est suivie d'une étape 40 de commutation de toutes les interfaces de l'équipement de routage, du plan nominal de routage opérationnel vers un plan secondaire de routage opérationnel correspondant au mode de fonctionnement dégradé résultant du dysfonctionnement détecté.

Cette étape 40 comporte tout d'abord une sous-étape 42 de sélection d'un plan secondaire parmi la pluralité de plans secondaires précalculés lors de la phase A puis une sous-étape 44 d'émission d'une information de synchronisation vers toutes les interfaces de communication de manière à provoquer la commutation simultanée et instantanée de toutes ces interfaces vers le plan secondaire sélectionné.

Cette sous-étape 44 peut notamment être réalisée par l'envoi de deux messages successifs, le premier visant à informer chaque interface du plan secondaire sélectionné puis le second message de synchronisation pour commander l'application du plan secondaire.

Le procédé de l'invention permet donc de réduire considérablement le temps écoulé entre l'étape 30 de détection d'un dysfonctionnement et la fin de l'étape 40, à l'issue de laquelle l'équipement de routage est opérationnel dans le mode de fonctionnement dégradé du réseau.

En effet, grâce au procédé de l'invention, le calcul du plan secondaire de routage opérationnel de même que son transfert vers les interfaces, sont anticipés et réalisés au cours d'une période de fonctionnement nominal.

Ainsi, entre l'instant de détection d'un dysfonctionnement et la disponibilité de l'équipement de routage, aucun calcul ne doit être réalisé et seules des informations courtes de synchronisation sont transférées.

Bien entendu, le procédé de l'invention peut cohabiter avec un procédé existant, de manière à ce qu'un procédé classique soit mis en oeuvre dans le cas où le dysfonctionnement détecté ne correspond pas à un mode de fonctionnement dégradé anticipé et pré-calculé lors de la phase A, de sorte qu'aucun plan secondaire de routage opérationnel n'est disponible au moment de la détection du dysfonctionnement.

Avantageusement, la phase A du procédé de l'invention est réalisée périodiquement de manière à mettre à jour les plans secondaires de routage opérationnel en fonction des évolutions de la topologie du réseau. Notamment, dans le cas d'un dysfonctionnement devenu permanent, le mode de fonctionnement dégradé devient le mode de fonctionnement nominal et le plan secondaire de routage opérationnel devient le plan de fonctionnement nominal, d'autres plans secondaires de routage opérationnel étant calculés et mis en mémoire au niveau de chaque interface.

Le procédé de l'invention est particulièrement intéressant à mettre en oeuvre pour des équipements de routage situés à la périphérie d'un réseau et disposant de ce fait d'un nombre faible d'interfaces vers le coeur du réseau et éventuellement de seulement deux interfaces correspondant à un fonctionnement normal et un fonctionnement de secours. Dans ce mode de réalisation, le calcul d'un plan nominal de routage opérationnel et d'un unique plan secondaire de routage opérationnel permettent de gérer tous les cas de dysfonctionnement.

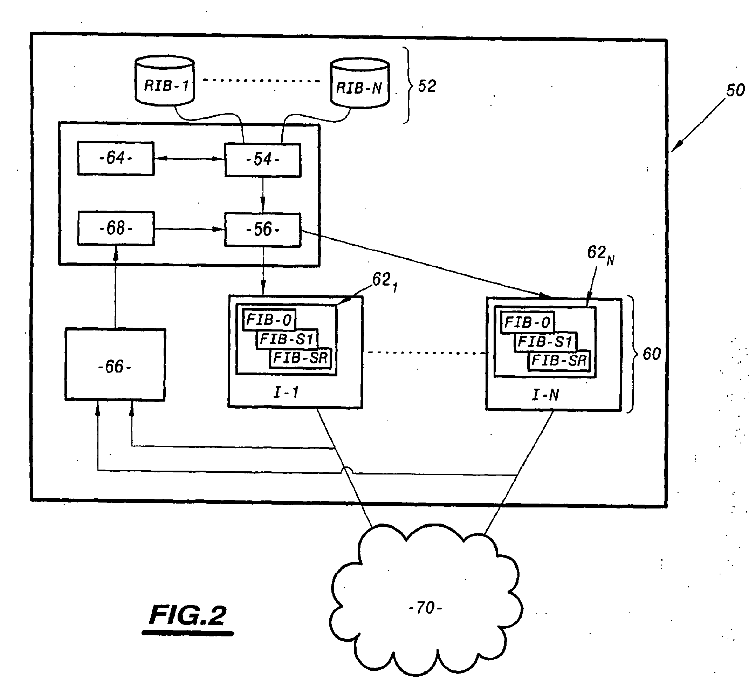

En référence à la figure 2, on va maintenant décrire un schéma bloc de l'équipement de routage mis en oeuvre dans le procédé selon l'invention.

De manière classique, cet équipement de routage 50 comprend une pluralité de bases de données unitaires RIB-1 à RIB-N, l'ensemble de ces bases de données étant désigné par la référence numérique générale 52.

L'équipement de routage comprend en outre une unité 54 de calcul de plans de routage opérationnels, reliée aux bases de données 52 et adaptée pour délivrer le plan nominal de routage opérationnel, référencé FIB-O. L'équipement de routage comporte ensuite des moyens 56 de transfert d'informations vers une pluralité d'interfaces réseau, I-1 à I-N. Ces interfaces sont désignées dans leur ensemble par la référence numérique 60.

Chaque interface réseau comporte une unité de mémoire propre 62₁ à 62_{N} destinée notamment au stockage du plan nominal de routage opérationnel FIB-O.

Dans le cadre de l'invention, l'équipement de routage 50 comporte des moyens 64 de simulation de dysfonctionnements, reliés à l'unité de calcul 54 et, au travers de celle-ci, aux bases de données 52.

Par ailleurs, l'équipement de routage 50 comprend des moyens 66 de détection de dysfonctionnements, reliés à des moyens 68 de synchronisation des interfaces 60, lesquels sont adaptés pour commander les moyens 56 pour le transfert d'information vers les interfaces 60.

Les moyens 66 de détection de dysfonctionnement ainsi que chaque interface 60 sont reliées au réseau de télécommunication désigné par la référence numérique 70.

En fonctionnement nominal, les bases de données 52 permettent à l'unité de calcul 54 de calculer le plan nominal de routage opérationnel FIB-O, lequel est transféré aux interfaces 60 par le biais des moyens de transfert 56. Chaque interface 60 stocke dans sa mémoire 62, ce plan nominal pour le mettre en oeuvre.

Selon le procédé de l'invention, au cours du fonctionnement nominal, les moyens 64 de simulation modifient des paramètres délivrés par les bases de données 52, de manière à permettre le calcul de plans secondaires de routage opérationnel pour des modes de fonctionnement dégradé par l'unité de calcul 54.

Les moyens de simulation 64 et l'unité de calcul 54 mettent ainsi en oeuvre l'étape 10 du procédé de l'invention.

Les plans secondaires de routage opérationnel, notés FIB-S1 à FIB-SR, sont ensuite transférés par les moyens de transfert 56 vers les mémoires 62₁ à 62_{N} des interfaces I-1 à I-N mettant ainsi en oeuvre l'étape 20 du procédé.

Chaque interface 60 mémorise ainsi le plan nominal de routage opérationnel FIB-O et l'intégralité des plans secondaires de routage opérationnel FIB-S1 à FIB-SR.

Ultérieurement, les moyens 66 détectent l'apparition d'un dysfonctionnement sur le réseau 70, en mettant en oeuvre l'étape 30 du procédé.

La nature du dysfonctionnement est transmise aux moyens 68 de synchronisation, lesquels sélectionnent un plan secondaire de routage opérationnel parmi la pluralité calculée précédemment et transmettent aux interfaces 60 une instruction de commutation par le biais des moyens 56.

Cette instruction est reçue simultanément par toutes les interfaces 60 qui commutent du plan nominal de routage opérationnel FIB-O vers un plan secondaire déterminé mémorisé préalablement.

Cette commutation correspond à la mise en oeuvre de l'étape 40 et est extrêmement rapide.

En variante, les moyens 64 de simulation sont extérieurs à l'équipement de routage 50 et reliés à celui-ci au moyen de connexions classiques, telles que par exemple des connexions de type USB, ou des processus internes et distincts.

De même, dans une autre variante, les moyens 66 de détection de dysfonctionnements sont extérieurs à l'équipement de routage 50 qui dispose de moyens de connexion avec ces moyens de détection de dysfonctionnements.

Dans le mode de réalisation décrit, l'ensemble des moyens de calcul formés par les moyens de simulation 64 d'unité de calcul 54, les moyens de transfert 56 et les moyens de commutation 68 sont intégrés dans un même microprocesseur. Bien entendu, d'autres solutions matérielles, telles que l'utilisation de composants programmés, d'une pluralité de micro-processeurs ou plusieurs autres solutions équivalentes peuvent être envisagées dans le cadre de l'invention.

## Revendications

1. Procédé de gestion de dysfonctionnements d'un réseau de télécommunication (70), au niveau d'un équipement de routage (50) qui comprend plusieurs interfaces (60) de communication avec ledit réseau (70) et un plan nominal de routage opérationnel (FIB-O) dupliqué sur chaque interface (60), **caractérisé en ce qu'**il comporte, en fonctionnement nominal :
- une étape (10) de calcul d'au moins un plan secondaire de routage opérationnel (FIB-S1 à FIB-SR) pour des modes de fonctionnement dégradés du réseau (70) ; et
- une étape (20) de transfert de tous les plans secondaires à chaque interface (60),
et **en ce qu'**il comporte en outre, en cas de détection d'un dysfonctionnement sur le réseau (70), une étape (40) de commutation de toutes les interfaces (60), du plan nominal (FIB-O) vers un plan secondaire correspondant au mode de fonctionnement dégradé résultant du dysfonctionnement détecté.

2. Procédé selon la revendication 1, **caractérisé en ce que** chacune desdites interfaces (60) est adaptée pour la gestion d'un ou plusieurs protocoles de communication réseau.

3. Procédé selon l'une quelconque des revendications 1 et 2, **caractérisé en ce que** ladite étape (10) de calcul comprend :
- une sous-étape (12) de simulation d'un dysfonctionnement ;
- une sous-étape (14) de mise à jour de bases de données unitaires de routage (52) associées auxdites interfaces (60) en prenant en compte ledit dysfonctionnement simulé ; et
- une sous-étape (16) de calcul d'un plan secondaire de routage opérationnel pour le mode de fonctionnement dégradé résultant du dysfonctionnement simulé.

4. Procédé selon l'une quelconque des revendications précédentes, **caractérisé en ce que** lesdites étapes (10) de calcul et (20) de transfert sont réalisées périodiquement.

5. Procédé selon l'une quelconque des revendications précédentes, **caractérisé en ce que** ladite étape (40) de commutation de toutes les interfaces (60) comprend :
- une sous-étape (42) de sélection d'un plan secondaire de routage opérationnel correspondant à un mode de fonctionnement dégradé résultant d'un dysfonctionnement détecté ; et
- une sous-étape (44) de transmission d'informations de synchronisation pour la commutation simultanée de toutes lesdites interfaces (60) vers ledit plan secondaire sélectionné.

6. Procédé selon la revendication 5, **caractérisé en ce que** ladite sous-étape (44) de transmission d'informations de synchronisation comprend la transmission d'une information d'identification dudit plan secondaire de routage opérationnel sélectionné et, ultérieurement, la transmission d'une commande de commutation.

7. Procédé selon l'une quelconque des revendications précédentes, **caractérisé en ce que** ledit équipement de routage (50) comprend deux interfaces de communication avec ledit réseau (70) et **en ce que** ladite étape (10) de calcul comprend le calcul d'un unique plan secondaire de routage opérationnel.

8. Equipement de routage (50) du type comprenant plusieurs interfaces de communication (60) avec un réseau de télécommunication (70), comprenant en outre une base de données unitaire d'informations de routage (52) pour chaque interface (60), des moyens de calcul (52) d'un plan nominal de routage opérationnel à partir de ces bases de données unitaires (52) et des moyens (56) de transfert d'informations vers des mémoires associées à chaque interface (60) **caractérisé en ce que** lesdits moyens de calculs (52) sont adaptés pour être reliés à des moyens (64) de simulation de dysfonctionnements pour calculer des plans secondaires de routage opérationnels pour des modes de fonctionnement dégradés du réseau, lesdits moyens (56) de transfert d'informations étant adaptés pour transmettre ces plans secondaires aux mémoires (62) associées aux interfaces (60), l'équipement (50) comportant des moyens de synchronisation (68) des interfaces (60) pour commander leur commutation du plan nominal vers un plan secondaire lors de la détection d'un dysfonctionnement.

9. Equipement selon la revendication 8, **caractérisé en ce qu'**il comprend lesdits moyens de simulation (64).

10. Equipement selon l'une quelconque des revendications 8 et 9, **caractérisé en ce qu'**il comprend des moyens de détection de dysfonctionnements, reliés audit réseau (70) et auxdits moyens de synchronisation (68).

## Claims

1. Method of managing malfunctions in a telecommunication network (70), on a routing device (50) which comprises a plurality of communication interfaces (60) with said network (70) and a nominal operational routing plan (FIB-O) duplicated on each interface (60), **characterized in that** it comprises, during nominal operation:
- a step (10) for computing at least one secondary operational routing plan (FIB-S1 to FIB-SR) for degraded operating modes of the network (70); and
- a step (20) for transferring all the secondary plans to each interface (60),
and **in that** it also comprises, in case of detection of a malfunction on the network (70), a step (40) for switching all the interfaces (60) from the nominal plan (FIB-O) to a secondary plan corresponding to the degraded operating mode resulting from the detected malfunction.

2. Method according to Claim 1, **characterized in that** each of said interfaces (60) is adapted to manage one or more network communication protocols.

3. Method according to either of Claims 1 and 2, **characterized in that** said computation step (10) comprises:
- a substep (12) for simulating a malfunction;
- a substep (14) for updating individual routing information bases (52) associated with said interfaces (60), by taking into account said simulated malfunction; and
- a substep (16) for computing a secondary operational routing plan for the degraded operating mode resulting from the simulated malfunction.

4. Method according to any one of the preceding claims, **characterized in that** said computation (10) and transfer (20) steps are performed periodically.

5. Method according to any one of the preceding claims, **characterized in that** said step (40) for switching all the interfaces (60) comprises:
- a substep (42) for selecting a secondary operational routing plan corresponding to a degraded operating mode resulting from a detected malfunction; and
- a substep (44) for transmitting synchronization information for the simultaneous switching of all said interfaces (60) to said selected secondary plan.

6. Method according to Claim 5, **characterized in that** said substep (44) for transmitting synchronization information comprises the transmission of information identifying said selected secondary operational routing plan and, subsequently, the transmission of a switching command.

7. Method according to any one of the preceding claims, **characterized in that** said routing device (50) comprises two communication interfaces with said network (70) and **in that** said computation step (10) comprises the computation of a single secondary operational routing plan.

8. Routing device (50) of the type comprising a plurality of communication interfaces (60) with a telecommunication network (70), also comprising an individual routing information base (52) for each interface (60), means (52) of computing a nominal operational routing plan based on these individual information bases (52) and means (56) of transferring information to memories associated with each interface (60), **characterized in that** said computation means (52) are adapted to be linked to means (64) of simulating malfunctions to compute secondary operational routing plans for degraded operating modes of the network, said transfer means (56) being designed to transmit these secondary plans to the memories (62) associated with the interfaces (60), the device (50) comprising means (68) of synchronizing the interfaces (60) to control their switching from the nominal plan to a secondary plan on detection of a malfunction.

9. Device according to Claim 8, **characterized in that** it comprises said simulation means (64).

10. Device according to either of Claims 8 and 9, **characterized in that** it comprises means of detecting malfunctions, linked to said network (70) and to said synchronization means (68).

## Patentansprüche

1. Verfahren zur Verwaltung von Funktionsstörungen eines Fernmeldenetzes (70) in Höhe einer Routingeinrichtung (50), die mehrere Kommunikations-Schnittstellen (60) mit dem Netz (70) und einen nominalen funktionsfähigen Routingplan (FIB-O) aufweist, der auf jeder Schnittstelle (60) dupliziert ist, **dadurch gekennzeichnet, dass** es im Nominalbetrieb aufweist:
- einen Schritt (10) der Berechnung mindestens eines sekundären funktionsfähigen Routingplans (FIB-S1 bis FIB-SR) für Notbretriebsmodi des Netzes (70); und
- einen Schritt (20) des Transfers aller sekundären Pläne an jede Schnittstelle (60),
und dass es weiter im Fall der Erfassung einer Funktionsstörung im Netz (70) einen Schritt (40) der Umschaltung aller Schnittstellen (60) vom nominalen Plan (FIB-O) zu einem sekundären Plan aufweist, der dem Notbetrieb entspricht, der aus der erfassten Funktionsstörung resultiert.

2. Verfahren nach Anspruch 1, **dadurch gekennzeichnet, dass** jede der Schnittstellen (60) an die Verwaltung eines oder mehrerer Netzkommunikationsprotokolle angepasst ist.

3. Verfahren nach einem der Ansprüche 1 und 2, **dadurch gekennzeichnet, dass** der Rechenschritt (10) aufweist:
- einen Unterschritt (12) der Simulation einer Funktionsstörung;
- einen Unterschritt (14) der Aktualisierung von den Schnittstellen (60) zugeordneten einheitlichen Routing-Datenbasen (52) unter Berücksichtigung der simulierten Funktionsstörung; und
- einen Unterschritt (16) der Berechnung eines sekundären funktionsfähigen Routingplan für den Notbetriebsmodus, der aus der simulierten Funktionsstörung resultiert.

4. Verfahren nach einem der vorhergehenden Ansprüche, **dadurch gekennzeichnet, dass** die Schritte der Berechnung (10) und des Transfers (20) periodisch ausgeführt werden.

5. Verfahren nach einem der vorhergehenden Ansprüche, **dadurch gekennzeichnet, dass** der Schritt (40) der Umschaltung aller Schnittstellen (60) aufweist:
- einen Unterschritt (42) der Auswahl eines sekundären funktionsfähigen Routingplans entsprechend einem Notbetriebsmodus resultierend aus einer erfassten Funktionsstörung; und
- einen Unterschritt (44) der Übertragung von Synchronisationsinformationen für die gleichzeitige Umschaltung aller Schnittstellen (60) zum ausgewählten sekundären Plan.

6. Verfahren nach Anspruch 5, **dadurch gekennzeichnet, dass** der Unterschritt (44) der Übertragung von Synchronisationsinformationen die Übertragung einer Identifikationsinformation des ausgewählten sekundären funktionsfähigen Routingplans und später die Übertragung eines Umschaltbefehls enthält.

7. Verfahren nach einem der vorhergehenden Ansprüche, **dadurch gekennzeichnet, dass** die Routingeinrichtung (50) zwei Kommunikationsschnittstellen mit dem Netz (70) aufweist und dass der Rechenschritt (10) die Berechnung eines einzigen sekundären funktionsfähigen Routingplans aufweist.

8. Routingeinrichtung (50) von der Art, die mehrere Kommunikationsschnittstellen (60) mit einem Fernmeldenetz (70) aufweist, die außerdem eine einheitliche Datenbasis von Routinginformationen (52) für jede Schnittstelle (60), Mittel (52) zur Berechnung eines nominalen funktionsfähigen Routingplans ausgehend von diesen einheitlichen Datenbasen (52) und Mittel (56) für den Transfer von Informationen zu jeder Schnittstelle (60) zugeordneten Speichern aufweist, **dadurch gekennzeichnet, dass** die Rechenmittel (52) angepasst sind, um mit Mitteln (64) zur Simulation von Funktionsstörungen verbunden zu werden, um sekundäre funktionsfähige Routingpläne für Notbetriebsmodi des Netzes zu berechnen, wobei die Transfersmittel (56) angepasst sind, um diese sekundären Pläne an die den Schnittstellen (60) zugeordneten Speicher (62) zu übertragen, wobei die Einrichtung (50) Synchronisationsmittel (68) der Schnittstellen (60) aufweist, um ihre Umschaltung von dem nominalen Plan zu einem sekundären Plan zu steuern, wenn eine Funktionsstörung erfasst wird.

9. Einrichtung nach Anspruch 8, **dadurch gekennzeichnet, dass** sie die Simulationsmittel (64) enthält.

10. Einrichtung nach einem der Ansprüche 8 und 9, **dadurch gekennzeichnet, dass** sie Mittel zur Erfassung von Funktionsstörungen aufweist, die mit dem Netz (70) und mit den Synchronisationsmitteln (68) verbunden sind.
